# EUROPEAN PATENT SPECIFICATION

(11) **EP 2 331 221 B1**
(45) Date of publication and mention of the grant of the patent: **03.01.2018**
(21) Application number: 09710135.6
(22) Date of filing: 13.02.2009
(51) Int. Cl.: G06F 21/10, A63F 9/24

(54) **METHODS AND SYSTEMS FOR LICENSE SHARING AMONG GAMING TERMINALS**
VERFAHREN UND SYSTEME ZUR GEMEINSAMEN NUTZUNG VON LIZENZEN DURCH SPIEL-ENDGERÄTE
PROCÉDÉS ET SYSTÈMES POUR LE PARTAGE DE LICENCE PARMI DES TERMINAUX DE JEU

(30) Priority: 15.02.2008 US 65975 P; 19.08.2008 US 194332
(43) Date of publication of application: 15.06.2011
(73) Proprietor: SPIELO International Canada, ULC, Moncton, NB (CA)
(72) Inventor: RYBAK, Ihor, Bohdan, Saunderstown RI 02874 (US)
(74) Representative: Studio Torta S.p.A.
(86) International application number: PCT/US2009/034054
(87) International publication number: WO 2009/102956

(56) References cited:
- EP-A2- 1 862 202
- US-A1- 2005 182 731
- US-A1- 2005 182 731
- US-A1- 2005 192 099
- US-A1- 2006 276 244
- US-A1- 2007 136 817
- US-A1- 2007 136 817
- US-A1- 2007 203 846
- Wikipedia: "Priority queue", , 6 February 2008 (2008-02-06), XP55012185, Retrieved from the Internet: URL:http://en.wikipedia.org/w/index.php?ti tle=Priority_queue&oldid=189564355 [retrieved on 2011-11-15]

## Description

### CROSS-REFERENCES TO RELATED APPLICATIONS

This application claims the benefit of United States Patent Application No. 61/065,975, filed February 15, 2008 and United States Patent Application No. 12/194,332, filed August 19, 2008.

### FIELD OF THE INVENTION

The present application is generally related to gaming apparatus that require a license, such as a game terminal, video slot machine, or video poker machine, although it may also be applicable to other computer-based games where licenses are required.

### BACKGROUND INFORMATION

Electronic wagering machines such as conventional slot machines, video slot machines, or video poker machines have long been a staple for the gaming industry. However, in many jurisdictions the number of gaming machines allowed in a particular location or that may be operated by a particular operator may be set by law, regulation, or license. The level is often set below the level at which operator profit is maximized. In other words, the number of machines that would be operated based on consumer demand and market conditions typically exceeds the legally allowed gaming machine supply in some jurisdictions.

### SUMMARY

One example embodiment of the present invention is a system, including a plurality of wagering game terminals, each having a token-enabled state and a non-enabled state. The system has a plurality of tokens associated with a capability, and the number of tokens is less than the number of terminals. Also, each of the plurality of tokens may be configured, when held by one of the terminals, to allow the terminals to operate in the token-enabled state. The plurality of terminals are each configured to enter the token-enabled state only when a token is received by the terminal and to return to the non-enabled state when the token is surrendered by the terminal. When a terminal is in the token-enabled state, the terminal provides at least one wagering game to a player. When the terminal in the non-enabled state, the terminal is prevented from offering wagering games.

Optionally, several other features may be provided, alone or in combination with each other, in the example system. The token-enabled state may include a plurality of game formats, wherein the terminal may be configured to provide a selection of one or more of the game formats, and the selection may be based, at least in part, on instructions associated with the token. Optionally, the instructions associated with the token may be based, at least in part, on the time of day. Optionally, the return to the non-enabled state may be caused by a user exiting the token-enabled state. Optionally, return to the non-enabled state is caused by the terminal being in the token-enabled state for a period of time.

Optionally, the terminals may be configured to log data including at least one of: revenue generated by a terminal in the token-enabled state, number of terminals in the token-enabled state, and number of token requests not immediately fulfilled. The plurality of terminals may be configured to communicate with each other, and the surrendering of a token may include the terminals being configured to communicate the availability of a token to each other. The terminals may be configured to queue when token requests exceed token availability. The order of terminals in the queue may be prioritized based, at least in part, on at least one of: the amount of time the terminal has been in the queue, the location of the terminal, the amount of time the terminal has already been in the token-enabled state during a time period, the operator of the terminal, or the profitability of the terminal.

The wagering game terminal may include at least one of: video slots, video poker, keno, bingo, lottery, conventional mechanical slots, blackjack, craps or roulette.

Another example embodiment of the present invention is a method. The example method includes being prevented from providing a wagering game when in a non-enabled state, requesting a token associated with a capability, entering a token-enabled state (responsive to the receipt of a token), providing at least one wagering game while in the enabled state, returning to the non-enabled state, and finally, surrendering the token.

Optionally, several other features may be provided, alone or in combination with each other, in the example method. Entering a token-enabled state may include providing at least one wagering game. The entering a token-enabled state may include providing a plurality of game formats. Additionally, the example method may include receiving instructions associated with a token, and selecting which one or more game formats to provide, from the plurality of game formats, based, at least in part, on the instructions.

Optionally, in the example method, the instructions associated with the tokens may be based, at least in part, on the time of day. The return to the non-enabled state may be caused by a user exiting the token-enabled state. Alternatively, the return to the non-enabled state may be caused by the terminal being in the token-enabled state for a period of time. The example method may also include logging data, which may include at least one of: revenue generated while in the token-enabled state, time spent waiting for a token, or amount of time in the token-enabled state. The example method may also include communicating the availability of a token, responsive to the surrendering of the token.

Another example embodiment of the present invention is a system that includes a plurality of tokens associated with a capability. Each token may be configured to be in one of one or more states, and the states include at least an issued state and an available state. The tokens are configured to enter the issued state responsive to an entity requesting a token and that token being in the available state. Also, tokens are configured to enter the available state, responsive to being surrendered by the entity the token has been issued to. Optionally, in the example system, a token may be associated with a license to operate a wagering terminal.

Another example embodiment of the present invention is a system, including a server configured to control the allocation of a plurality of tokens associated with a capability. The server is configured to receive a request from a terminal for a token, where the number of terminals configured to issue a request for a token to the server is greater than the number of tokens the server is configured to control. Also, the server is configured to issue a token, responsive to a request for a token, if a token is available. The server is configured to queue requests for tokens, if no tokens are currently available.

Optionally, in the example system, the number of tokens the server is configured to control may correspond to a number of licenses for the operation of a wagering terminal. Optionally, in the example system, the server may be configured to control token allocation for at least one jurisdiction, and the maximum number of tokens the server may issue to terminals located within any particular jurisdiction, may depend on the number of licenses issued for that jurisdiction. Optionally, in the example system, the server may be configured to send instructions to the terminal, associated with issuing a token to that terminal.

Optionally, in the example system, the instructions may include at least one of the following: which wagering game formats will be available at the terminal, the minimum wager allowed at the terminal, the maximum wager allowed at the terminal, or the maximum amount of time the terminal will be issued the token. The server may be configured to recall an issued token. The queue of terminals, which have requested a token, may be prioritized according to one of more of the following criteria: the amount of time the terminal has been in the queue, the location of the terminal, the amount of time the terminal has already been in the token-enabled state during a time period, the operator of the terminal, or the profitability of the terminal. The server may also be configured to log data, including any one or more of the following: revenue generated by each terminal that requests a token, number of issued tokens per time period, and number of token requests not immediately fulfilled.

Another example embodiment of the present invention may include a method for controlling the allocation of a plurality of tokens associated with a capability. The example method will receive a request from a terminal for a token. The number of terminals configured to issue a request for a token will be greater than the number of tokens in the plurality of tokens. The example method will issue a token, responsive to a request for a token, if a token is available. The example method will queue requests for tokens, if no tokens are currently available.

Optionally, in the example method the number of tokens in the plurality of tokens corresponds to a number of licenses for the operation of a wagering terminal. The example method may allocate tokens for at least one jurisdiction, and the maximum number of tokens the example method will issue to terminals located within any particular jurisdiction depends on the number of licenses issued for that jurisdiction. The example method may send instructions to the terminal associated with the issuing a token.

Optionally, in the example method, the instructions may include at least one of the following: which wagering game formats will be available at the terminal, the minimum wager allowed at the terminal, the maximum wager allowed at the terminal, or the maximum amount of time the terminal will be issued the token. Optionally, the example method may recall an issued token. Optionally, the example method may prioritize the queue of terminals, which have requested a token, according to one or more of the following criteria: the amount of time the terminal has been in the queue, the location of the terminal, the amount of time the terminal has already been in the token-enabled state during a time period, the operator of the terminal, or the profitability of the terminal.

Optionally, the example method may log data, including any one or more of the following: revenue generated by each terminal that requests a token, number of issued tokens per time period, and number of token requests not immediately fulfilled.

Another example embodiment of the present invention is a method of logging the allocation of a plurality of tokens to a plurality of wagering game terminals. The method will provide an account of data associated with the allocation of terminals, including how many tokens were allocated at any particular time.

Optionally, the example method may provide a report which satisfies a reporting or compliance requirement of an entity associated with the licenses.

One example embodiment of the present invention is a system for sharing authorization tokens, which includes a plurality of terminals. Each terminal is configured in a first state. The example system has at least one server, which is configured to control the allocation of at least one token. The token may provide an authorization grant, and the number of tokens may correspond to a number of licenses for the operation of a wagering game. The server may be configured to control token allocation at least one location, and the number of tokens the server will issue to terminals located in a particular location is based on the number of licenses available for that particular location. The example system has a first terminal, which is configured to request a token, responsive to a request by a user to enter a second state. The second state includes providing a wagering game, and the first state does not include providing a wagering game. The first terminal is configured, responsive to receipt of a token, to enter a second state. The second state is configured to have at least two sub-states. The server determines which sub-states are available for the first terminal to enter. The first terminal is configured, responsive to returning to the first state, to return the token to the server. The server is configured to queue a request for a token from a second terminal, when no tokens are currently available. The server is configured to ensure that the number of terminals in the second state does not exceed the number of terminals legally allowed to operate a wagering game within the jurisdiction the terminals are located in.

### BRIEF DESCRIPTION OF THE DRAWINGS

Figure 1 illustrates another example system, according to an example embodiment of the present invention.
Figure 2A illustrates an example procedure, according to an example embodiment of the present invention.
Figure 2B illustrates another example procedure, according to an example embodiment of the present invention.
Figure 3 illustrates another example procedure, according to an example embodiment of the present invention.
Figure 4 illustrates another example procedure, according to an example embodiment of the present invention.
Figure 5 illustrates another example procedure, according to an example embodiment of the present invention.
Figure 6 illustrates an example system, according to an example embodiment of the present invention.
Figure 7 illustrates another example system, according to an example embodiment of the present invention.
Figure 8 illustrates an example timeline of example systems, according to an example embodiment of the present invention.
Figure 9 illustrates another example procedure, according to an example embodiment of the present invention.

### DETAILED DESCRIPTION OF EXAMPLE EMBODIMENTS

An underutilization of gaming licenses has been observed. By decoupling the one-to-one association of the physical operation of a gaming machine with the legal operation of a gaming machine for wagering, a higher number of gaming machines may be utilized legally, potentially increasing utilization of available licenses, and thereby increasing operator revenues and profits. For a simple illustrative example, it may be the case that only two gaming machines are allowed to operate at a location. At a location, a first machine might see a 100% utilization, a second machine might see a 60% utilization, while a third machine, which is not permitted, might see a 40% utilization. A game machine operator would then be forced to operate only the first and second machine, as the operator only has two licenses for the operation of gaming machines. However, without a license for the third machine, the operator will experience an underutilization of their licenses, which corresponds to an unfulfilled consumer demand. Some example embodiments of the present invention seek to eliminate this economic underutilization, by disassociating the physical capacity to operate a game, and the actual operation of the game. That is, some example embodiments of the present invention would allow the game operator to operate three multi-state devices, such as wager game terminals, where the devices may be configured to operate in a wagering game mode and a non-gaming "entertainment only" or "sleep" mode. The devices may be further configured to ensure that only the legally allowed number of the devices are in the gaming mode at any one time. In this way, a certain number of licenses for the operation of a gaming machine may be used for more than that number of devices so long as only the allowed number or fewer devices are operating in gaming mode at any one time. In the example given, if the demand at the third machine exactly matched the lack of demand at the second machine and vice versa, the two licenses would be fully utilized. To the extent the demand times overlap, there may still be some underutilization. Some of that overlapping demand may be captured by queueing requests for customers willing to wait. Regardless, more customers may be served and higher license utilizations achieved as compared to the prior situation where no third machine was provided. Further example embodiments with reference to illustrative figures follow below.

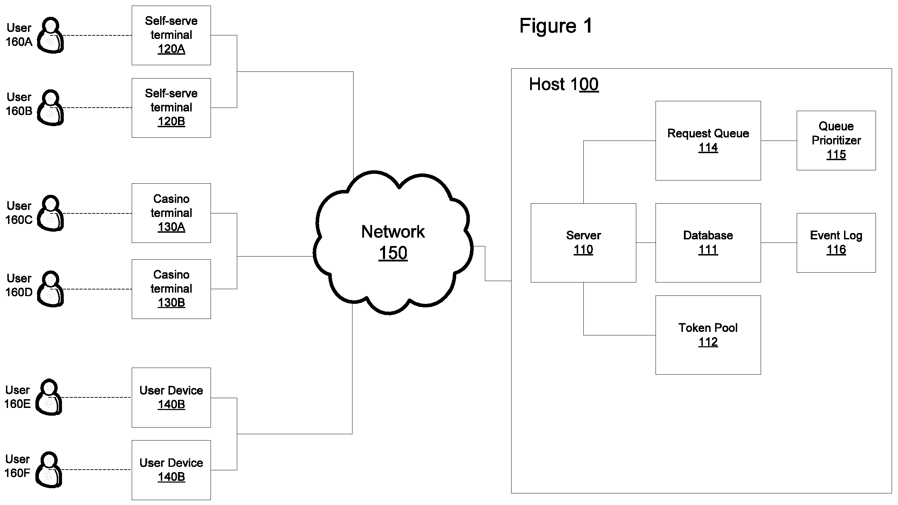

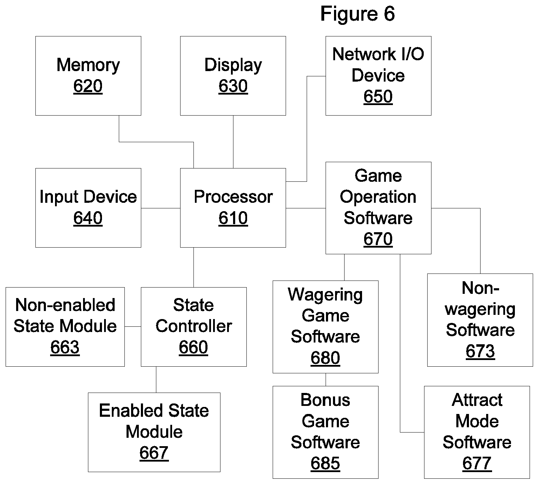

Figure 1 illustrates an example system, according to an example embodiment of the present invention. A Host 100 may control the allocation of tokens from a Token Pool 112. The Host 100 may include a Server 110, which may include one or more general purpose computers in one or more locations. Host 100 may have a network I/O device to connect the Host 100 to Network 150, which may be the Internet or an intranet network. Server 110 may be connected to a Database 111, which may store a variety of information, including the Event Log 116. The Event Log 116 may log different types of relevant events, and may be used to create compliance audits for business or regulatory purposes. The Server 110 may be connected to a Request Queue 114, which may be connected to a Queue Prioritizer 115. Together the Request Queue 114 and Queue Prioritizer 115 may be responsible for maintaining and organizing any queued requests from requesting terminals. The Host 100 may be connected via Network 150 to a number of terminals. These may include a number of "Self-serve terminals" 120, which may include terminals similar to the example embodiment described in Figure 6. There may be a number of terminals with a special designation such as, for example, "Casino terminals" 130. These terminals may have special prioritization rights in the Request Queue 114, or may have permanently assigned license tokens, which are never or rarely sent back to Token Pool 112. There may be a number of User Devices 140, for example a home computer, cell phone, or PDA. These devices may also be enabled to request license tokens from the Host 100 and perform "enabled state" actions when issued a license token.

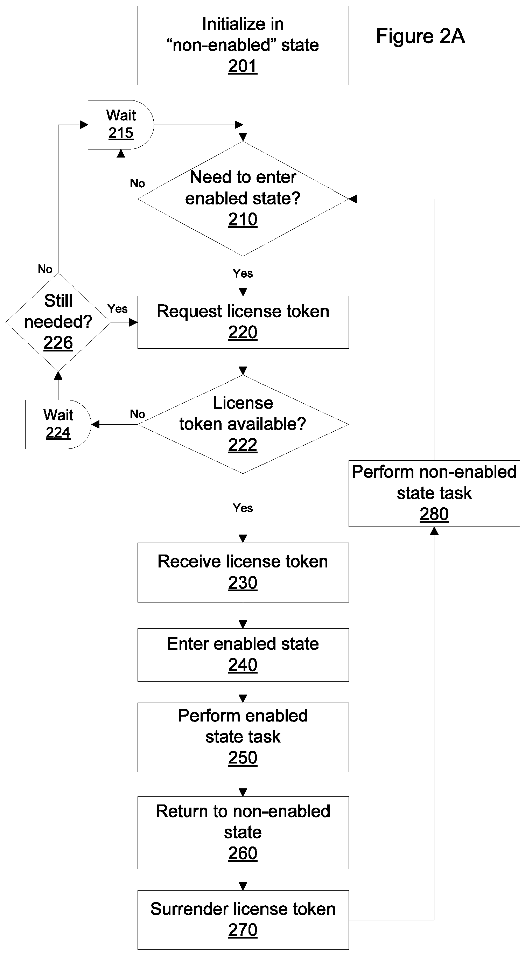

Figure 2A illustrates an example procedure, according to an example embodiment of the present invention. The example procedure here might be used by an example terminal. The example procedure may initialize in a non-enabled state at 201. Alternatively, the terminal may be set to initialize in an enabled state, so long as doing so would not cause the total number of enabled terminals to exceed some limiting value. Next, the example procedure may wait at 210 and 215 until there is a need to enter an enabled state, e.g., a player requests to wager at the terminal. At this point, the example procedure may request a license token 220. At 222, the example procedure may check to see if license tokens are available. If license tokens are not available, the example procedure may wait at 224, and then check to see if a license token is still needed at 226. If a license token is still needed, another request may be made at 220. If a license token is no longer needed, e.g., the customer gave up on waiting or "balked", the example procedure may return to 215 to wait for the next request. If, however, a license token is available at 122, then the example procedure may receive a license token 230, and enter the enabled state 140. The example procedure may then perform an enabled state task at 250, or alternatively, perform any quantity of enabled state tasks before the example procedure returns to the non-enabled state at 260. The example procedure may then surrender the license token at 270. At 280, the example procedure may perform a non-enabled state task, e.g., entertainment only games or other non-wagering tasks. The example procedure may continue to perform the non-enabled tasks until there is another need to enter the enabled state.

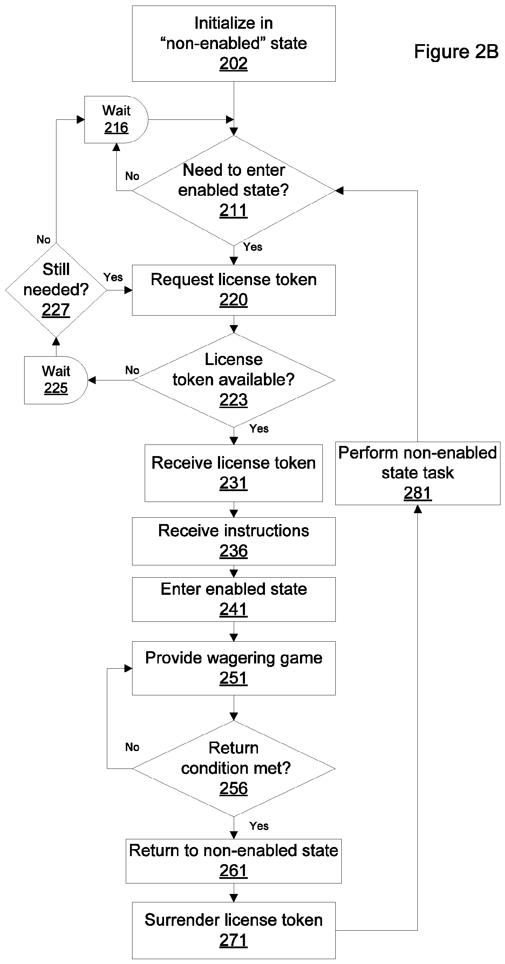

Figure 2B illustrates an example procedure for controlling access to tasks using a license token, according to an example embodiment of the present invention. The example procedure here may be used by an example wager game terminal or other system that provides wagering game functionality. The example procedure may initialize in a non-enabled state at 202. Next, the example procedure may wait at 211 and 216 until an enabled state needs to be entered, e.g., when a user indicates a desire to wager at the terminal. At this point, the example procedure may request a license token 221. If there is no license token available, the example procedure may wait 225 and, at 227, check to see if the license token is still needed. If the license token is no longer needed, e.g., the customer does not want to continue to wait, then the example procedure may go back to waiting for another license token to be needed at 216. At 227, if the license token is still needed, then another request may be made at 221. If, however, a license token is available at 223, then at 231, a license token may be required. At 236, instructions may be received along with the license token, and enter the enabled state at 241. At 251, an enabled state task may be performed, e.g., providing a wagering game to a player, such as video poker, keno, blackjack, slots, a video table game such as craps or roulette, or other wagering games. At 256, the enabled state task may continue (e.g., providing wagering games) until a license token return condition is met. Example license token return conditions include, e.g., an outside device may recall or request the license token, a time limit may have expired, a maximum amount wagered may have been met, etc. Once the return condition is met, at 261 the non-enabled state may be entered, and at 271, the license token may be surrendered. At 281, non-enabled state tasks may be performed, until there is another need to enter the enabled state.

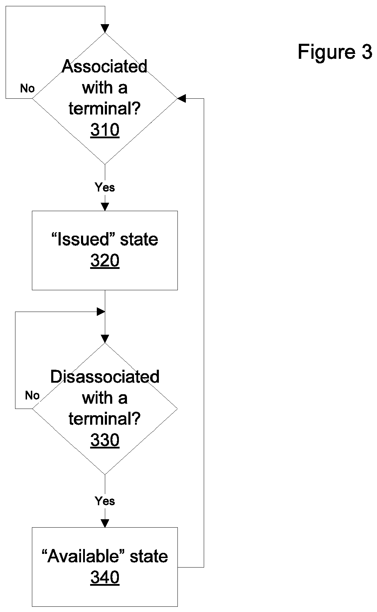

Figure 3 illustrates an example procedure for a state changing token, according to an example embodiment of the present invention. The license token may be in one of the two states, e.g., the "issued" state 320 or the "available" state 340. At 330, the license token may stay in the "issued" state, until the license token is disassociated from the terminal the license token was issued to. At this point, the license token may enter the "available" state 340, and wait until the license token is again associated with a terminal, at 310. It will be appreciated that additional states including more features may also be taken on by a token, e.g., enablement of only particular games.

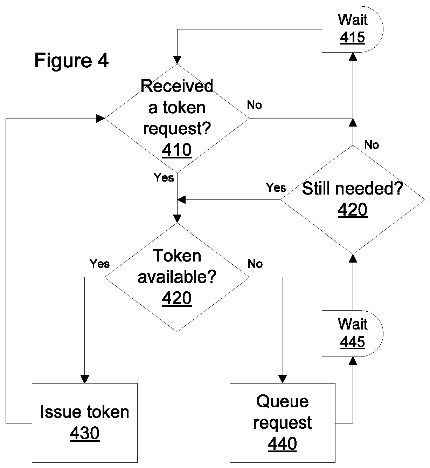

Figure 4 illustrates an example procedure, according to an example embodiment of the present invention. The illustrated example procedure may be used, e.g., at a central server providing the allocation control system described elsewhere in the present application. The example procedure may wait at 410 and 415 for a license token request. Upon a license token request, at 420, the example procedure may check to see if a license token is available. If a license token is not available, the example procedure may queue the request at 440 and continue to check for a license token at 420. The example procedure may also maintain the queue at 440, which may include prioritizing queued requests. After a request has been queued, the example procedure may wait at 445 and then check if a license token is still needed at 420. If a license token is no longer needed, the example procedure may return to checking for more requests at 410 and 415. If the license token is still needed at 420, then the example procedure may again check to see if one is available. If a license token is available, or when a license token becomes available, the example procedure may issue the license token at 430, and return to waiting for requests at 410. It will be appreciated that alternative token allocation control procedures may be used. For example, the procedure may be able to receive multiple requests, and may receive additional requests while fulfilling prior requests. The queue may have several queued requests, and may prioritize those requests, while waiting for available license tokens and receiving additional requests. It will be appreciated that various queueing and prioritization approaches may be employed, e.g., FIFO, LIFO, preferential treatment of high yielding machines or preferred customers, etc.

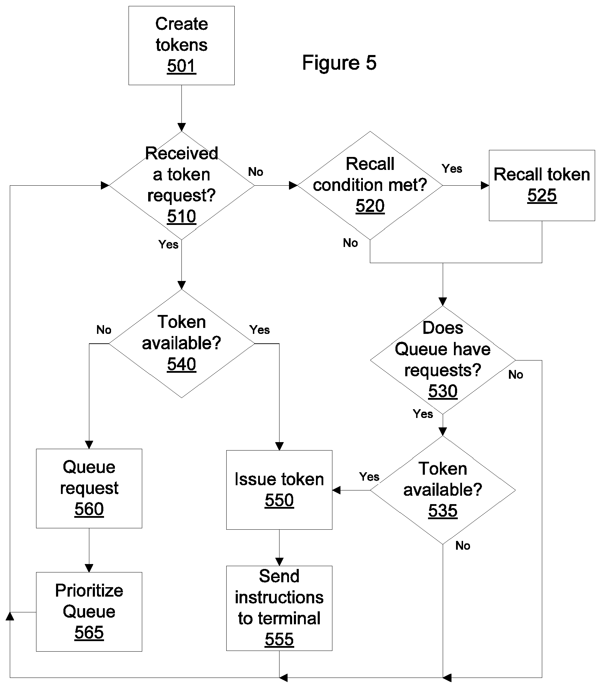

Figure 5 illustrates another example procedure for token handling, according to an example embodiment of the present invention. At 501, the example procedure may create or receive a quantity of license tokens. The example procedure may then check to see if there in a license token request at 510. If not, at 520 the example procedure may then see if any recall conditions have been met. If not, at 530 the example procedure may check to see if the queue holds any requests in it. If the queue is empty, at 510 the example procedure may return to check for license token requests. At 510, if a request was received, the example procedure may check to see if a license token is available at 540. If no token is available at 540, the example procedure may queue the request at 560, prioritize the queue at 565, and return to checking for a request at 510. If a license token was available at 540, the example procedure may issue the license token at 550. The example procedure may send additional instructions to the requesting terminal at 555, and then return to checking for license token requests at 510. If the recall condition of 520 was met, the example procedure may recall a license token at 525, and then check to see if the queue contains any requests at 530. If the queue does contain requests, at 535 the example procedure may check to see if a license token is available. If not, the example procedure may return to checking for new requests at 510. However, if a license token is available, the example procedure may issue the license token at 550, and may send instructions to the terminal at 555. The example procedure may then return to checking for license token requests at 510. The example described above is sequential. However, it will be appreciated that alternative procedures may execute concurrently, so that a system executing the example procedure may always be ready to receive requests, check recall conditions, and maintain a queue, even while executing other parts of the example procedure.

Examples of recall conditions were previously illustrated and may include, e.g., the license token being with a particular terminal for a predetermined period of time, the license token being with a particular player for a predetermined period of time, the time of day, the amount wagered at the terminal since the license token was issued, the amount wagered by a single player at the terminal, the profitability of the machine, the playing habits of a player at the machine, the size or contents of the request queue, the age of the oldest request in the queue, the average age of the requests in the queue, the location of the terminal the license token was issued to, the owner or operator of the terminal the license token was issued to, any other relevant condition, or any combination of these conditions. Similarly, the prioritization of the queue may be based on several factors, e.g., a simple first in first out (FIFO) configuration, the amount of time a request has been in the queue, the amount of time the terminal that sent the request has been in the queue during a particular interval, the profitability of a terminal which sent the request, the owner or operator of the terminal which sent the request, the location of the terminal which sent the request, the time of day, the identity of the player at the terminal which made the request, the amount wagered by the player at the terminal which sent the request, the betting habits of the player at the terminal which sent the request, as well as other relevant attributes, or any combination of these attributes. The additional instructions may include, e.g., any one of the recall conditions sent as an instruction to return the license token upon the condition (e.g., a push return instruction instead of a pull recall). The instruction may include an instruction on what games the terminal should make available, and that instruction may depend on any one of the above listed conditions or attributes (e.g., the time of day or location of the terminal). In some systems, it may be advantageous to always send a license token time-out instruction. In this case, if a terminal becomes disconnected from the system, the terminal will still know to discard the license token after the time-out period and the host will know to create a new license token after the time-out period. This "virtual return" may prevent a disconnected terminal with a license token from causing the loss of that license token (or occupying that license token) until the terminal is able to come back online into the system.

Figure 6 illustrates an example game terminal, according to an example embodiment of the present invention. The example system illustrated in Figure 6 may be a multi-state terminal system. The system may have a Processor 610, which may be connected to a number of devices. For example, the processor may be one or more microprocessors. The system may have a Network I/O Device 650 used to communicate with other systems via a network (e.g., a LAN, a private network, or a secure Internet connection). The system may have a Display 630, e.g., an LCD display, which may be used for a number of tasks including displaying a wagering game, advertisements, non-wagering games, a web browser, television signals, or any number of other visual media. The system may have a Memory 620. As is common with such systems the memory 620 may include several layers of memory, including hard disks, RAM, ROMS, removable disks, external hard drives, or any number of other data storage accessible to the processor 610. The system may have an Input Device or Input Devices 640. These may include a keyboard, mouse, joystick, microphone, touch screen, buttons, levers, switches, or any other input device. The system may have other output devices (not shown) such as a printer, speaker(s), or other types of output devices.

The terminal may have a State Controller 660, with a Non-Enabled State Module 663, and an Enabled State Module 667. The state controller may be provided as software on the processor, or alternatively as a separate device in communication with the processor. The State Controller 660 may be responsible for controlling when the terminal is in which state. It may do this by receiving an enabling "license token" from another device or "license token pool" via the Network I/O Connection 650. While in the enabled state, the Enabled State Module 667 may be responsible for providing certain features such as, for example, a wagering game. The example terminal may also have Game Operation Software 670, which may be connected to Wagering Game Software 680 and optional Bonus Game Software 685. The software components 670, 680, and 685 may provide the wagering game as described with reference to the Enabled State Module 667. The Non-Enabled State Module 663 may be responsible for providing content other than the enabled state content. The terminal may include other Game Operation Software 670 components, e.g., Non-Wagering Software 673 or Attract Mode Software 677. These may include a web browser for Internet surfing or email checking, it may be advertisements, non-wagering games, television signals/shows, a movie, movie previews/trailers, an indication of the wait time (if any) before the terminal may enter the enabled state, or any number of other activities. The example terminal may know when tokens are available, and the Attract Mode Software 677 may be focused more on encouraging customers to request enabled state games. When no license tokens are available, Non-Wagering Software 673 may provide content with less focus on encouraging customers to request enabled state games. In some embodiments, the content of the two states will be mutually exclusive, and in other embodiments, the two states will have some shared content.

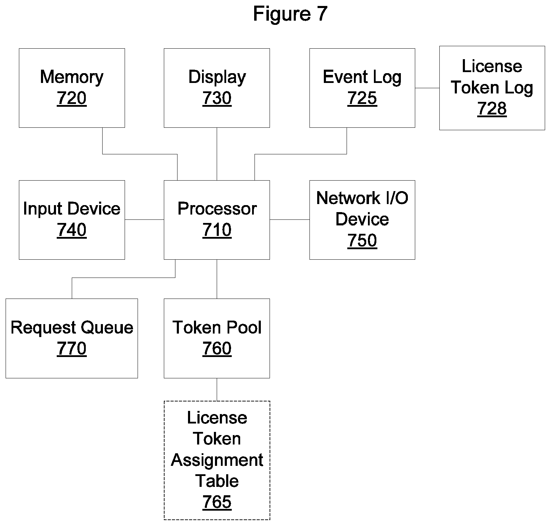

Figure 7 illustrates an example token allocation host, according to an example embodiment of the present invention. The example host may have a Processor 710, which may be connected to a number of devices. For example, the processor may be one or more microprocessors. The example host may have a Network I/O Device 750 used to communicate with other devices via a network (e.g., a LAN, a private network, or a secure Internet connection). The example host may have a Display 730, which may be used for a number of tasks including presenting a GUI used for controlling and administering the license token pool system. The example host may have a Memory 720. As is common with such devices, the Memory 720 may include several layers of memory, including hard disks, RAM, ROMS, removable disks, external hard drives, or any number of other data storage accessible to the processor. The example host may have an Input Device or Input Devices 740. These may include a keyboard, mouse, joystick, microphone, touch screen, buttons, levers, switches, or any other input device. The example host may have other output devices (not shown) such as a printer, speaker(s), or other types of output devices. The example host may have an Event Log 725 where it records various events and information. Examples of these may include, e.g., revenue generated by each terminal that requests a license token, number of issued license tokens per time period, and number of license token requests not immediately fulfilled, or any other relevant data. The example host may have a License Token Log 728, which may track the location and/or status of every license token. The Event Log 725 and License Token Log 728 may have features allowing the devices to be auditable, so that total license usage reports may be produced to check regulatory compliance. These features may allow a regulatory authority or other entity to audit any of the described procedures or devices to verify that no more than the allowed quantity of gaming terminals or other devices operated wagering games (or were in a wagering game enabled mode, or ran a particular wagering game) at a particular time. Approaches to producing an auditable record may include, e.g., writing a record of all token transfers to a write-only or other secure archival media either on a host, at a dedicated remote location, or on the game machines themselves; recording the times that game machines enter or exit particular modes to hard meters or other auditable media on the game machines or in secure records on the host; recording logs of token transfers or machine state changes to a soft auditable record together with cryptographically secure timestamps obtained from an outside source; or random sampling of the states of various machines to produce statistical evidence that the required thresholds were note exceeded. It will be appreciated that the features provided may be altered or varied based on the particular regulatory requirements of a jurisdiction where the devices or procedures are employed.

The example host may have a Token Pool 760, which may include one or more license tokens whose allocation may be controlled by the example host. Here, as with all other example embodiments disclosed in this application, a license token does not have to be a physical thing. The example host may have an optional License Token Assignment Table 765 where the host may keep track of license tokens. This may be in addition to passing physical or virtual license tokens, or may be an alternative to passing physical or virtual license tokens. A license token may be a database maintained by the example host that knows which terminals are in "enabled" states, and a license token pool may include ensuring that the number of terminals in the "enabled" state are less than or equal to some limit. In this example, the example host may send a message to the terminal informing that it may enter the enabled state, and the terminal may send a message back when leaving the enabled state. These messages and the recording database may be one embodiment of a "license token pool" and "license tokens". Other embodiments are possible to implement a shared resource among multiple resource requesting devices.

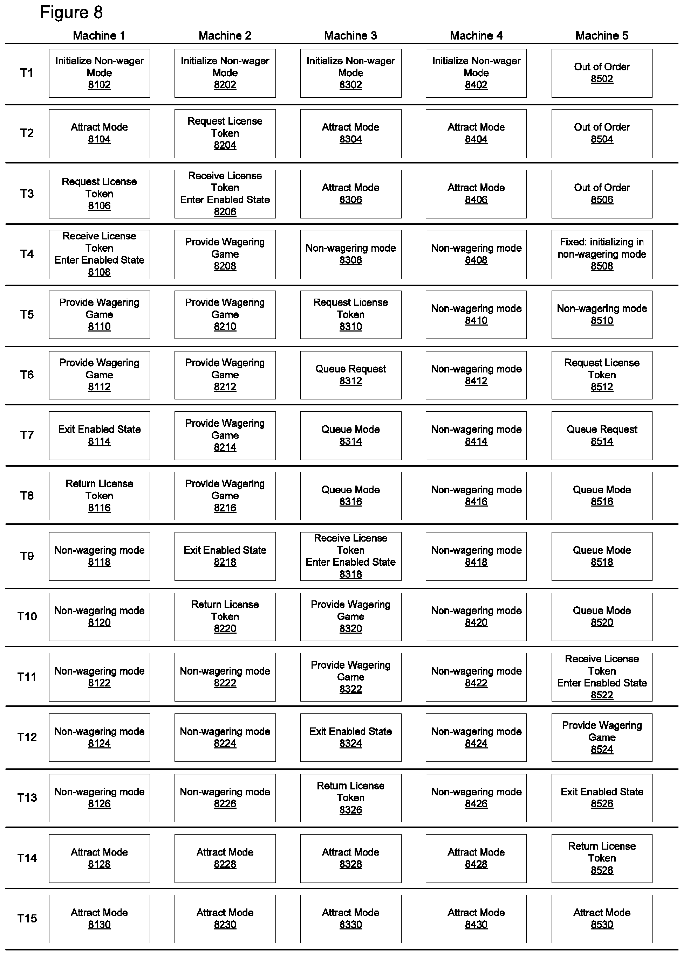

Figure 8 illustrates an example embodiment of the present invention, which shows five example terminals during fifteen consecutive points in time. In this example, the token pool (not shown) consists of two tokens. At T1, Machines 1-4 may initialize in non-wager mode. Machine 5 indicates that the machine is out of order 8502. At T2, Machine 2 requests a license token 8204, and Machine 5 is still out of order 8504. Machines 1, 3, and 4 enter Attract Mode. In this example, the machines (e.g., wagering game terminals) are configured to determine if tokens are available, even when no request has been made for a token. The machines may then enter an attract mode when tokens are available and the terminal is not currently in an enabled state. Attract mode may include content designed to encourage customers to request a wagering game. The machines may enter a non-wagering mode when the terminal is not in an enabled state and no tokens are available. In the non-wagering mode, non-wagering content may be provided, which does not encourage players to request a wagering game as much as the content of the attract mode. Attract mode content may include additional prompting, more wagering game advertisements, blocking out content such as television signals or reducing the screen size to allow for more advertisements, or any other types of content designed to encourage customers to request a wagering game.

At T3, since tokens are available, Machine 2 progresses to receiving a license token and entering the enabled state. The entering of the enabled state should never occur before the receiving of a token, but in some embodiments may occur at the same time. Also at T3, Machine 1 has requested a license token 8106. Machines 3 and 4 remain in attract mode, and Machine 5 remains out of order. At T4, Machine 1 receives a license token and enters the enabled state 8108. Machine 2 is providing a wagering game 8208 while in the enabled state. Now that both tokens have been issued, there are no additional tokens available, and Machines 3 and 4 switch from attract mode to non-wagering mode. Machine 5 has been fixed at T4, and is initializing in non-wagering mode.

At T5, Machines 1 and 2 are providing a wagering game, Machine 3 has requested a token, and Machines 4 and 5 are in non-wagering mode. At T6, Machines 1 and 2 are still providing a wagering game, and Machine 4 is still in non-wagering mode. Machine 5 has requested a license token 8512. Since no tokens are currently available, the request by Machine 3 has been queued 8312. At T7, Machine 1 stops providing a wagering game and exits the enabled state. The token is still not available for reissue, so Machine 3 is in queue mode 8314, and the request by Machine 5 has been queued 8514. At T8, Machine 1 returns the license token, and at T9 Machine 1 is in non-wagering mode. Also at T9, Machine 2 begins to exit the enabled state (e.g., because the player exited the wagering game). Also, queued Machine 3 is now issued a license token and enters the enabled state.

At T10, Machine 2 returns the license token, and Machine 3 begins providing a wagering game. At T11, queued Machine 5 receives the license token and enters the enabled state. At T12, Machine 3 exits the enabled state 8324, and at T13, Machine 3 returns the license token. Also at T13, Machine 5 begins to exit the enabled state. With the return of the token held by Machine 3, and with no requests in the queue, the Machines 1-4 switch from non-wagering mode to attract mode at T14. Machine 5 returns its token, and by T15 all five machines are in attract mode.

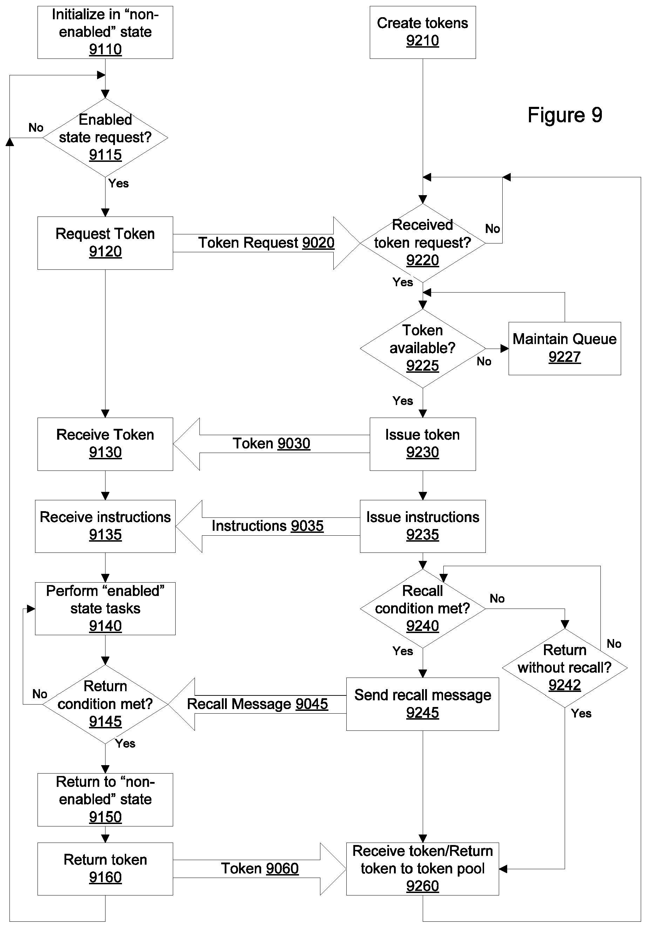

Figure 9 illustrates an example procedure according to an example embodiment of the present invention. The example procedure illustrated in Figure 9 includes two separate and concurrent flows of control, one for a client terminal and one for a host, which together illustrate an example interaction. At 9110, the terminal may begin by initializing in a "non-enabled" state. At 9210, the host may begin by creating, loading, or otherwise activating license tokens. The terminal may wait at 9115 until an enabled state request is made at the terminal (e.g., a player indicates a desire to play a wagering game at the terminal). Once an enabled state request is made, the terminal may request a license token at 9120. License token request 9020 may be any form of communication (e.g., data packets transferred over a network such as the Internet using a protocol such as TCP/IP). The License token request communication 9020 may be a synchronous protocol with multiple messages, asynchronous packet sent to an online transaction processing system and response, automated email queries, transfer of secure communication tokens, communications through proxies, or any other known transmission protocol or method. At 9220, the host may wait for the incoming License token request communication 9020.

After the host receives a request 9020, the host may check to see if a license token is available at 9225. If a license token is not available, the host procedure may queue the request and perform any other queue maintenance tasks including prioritizing the queued requests at 9227. If a license token is available, the host, at 9230, may issue a license token 9030. This license token 9030 may be received by the terminal at 9130. The host may also send the terminal instructions 9035 along with the license token at 9235. The terminal may receive the instructions at 9135. These instructions could be anything and may include a return condition specifying a condition upon which the terminal should return the license token. Other relevant examples of instructions are listed in other embodiments. The terminal may then enter an "enabled" state and perform enabled state tasks at 9140 (e.g., provide a wagering game). The terminal may also check for any return condition such as the expiration of a timer or a player indicating they would like to cash-out or otherwise exit the enabled state at 9145. If not, the terminal will continue in enabled mode. As well as return conditions local to the terminal and player actions, a return condition may be the receiving of a recall message 9045. After the host sent instructions at 9235, the host may check to see if a recall condition has been met at 9240. Recall conditions could be anything, and relevant examples were listed in other embodiments, such as the length of the request queue. If a recall condition is not met, the host, at 9242, may continue to wait for either the recall condition to be met or for the license token to be returned without a recall at 9242. If a recall condition is met, a recall message 9045 may be sent to the terminal at 9245.

Once the return condition is met at 9145, the terminal may return to a "non-enabled" state at 9150. After exiting the enabled state, the terminal may return the license token at 9160, and go back to waiting for an enabled state request at 9115. The host may receive license token 9060, and return the license token to the license token pool at 9260. The host may then go back to waiting for license token requests at 9220.

Although this example procedure is shown in a sequential order, for the illustration, it will be appreciated that all of the example procedures described herein may execute concurrently, so that many terminals running the terminal procedure may issue requests parallel, and requests are constantly received and processed asynchronously at the host.

In an alternative embodiment, the examples systems and methods described in the present application may be used to enable systems to use licensed content, e.g., protected intellectual property such as well-known game properties, game software, or other licensed content. A game system operator may purchase a license that allows a particular number of game terminals to use a particular type of licensed content. The system may then prevent more than that licensed number of terminals from providing the licensed content at any one time. Assuming regulations permit multiple wagering games to be offered by a particular machine, machines not currently using the particular licensed content might offer other wagering content, e.g., content owned by the game terminal operator, or content controlled by other licenses. In this case, the system regulates not the number of terminals offering wager, but rather the number of terminals offering a particular licensed game content. It will be appreciated that this alternative embodiment may be combined with the regulatory license embodiments, to control both the number of the terminals offering wagering, and the number of terminals offering a particular licensed game content at the same time, either by having multiple types of tokens, e.g., a token controlling wagering, and a token controlling the particular offered game, or by having multi-property tokens that control both features at the same time.

To allow for auditing and verification, all of the above-described systems and methods may include features to allow reliable verification of how game terminals were operated and/or the allocation of tokens over time in the system. These features may allow a regulatory authority or other entity to audit the above-described methods and systems to verify that no more than the allowed quantity of gaming terminals or other devices operated wagering games (or were in a wagering game enabled mode, or ran a particular wagering game) at a particular time. Approaches to producing an auditable record may include, e.g., writing a record of all token transfers to a write-only or other secure archival media either on a host, at a dedicated remote location, or on the game machines themselves; recording the times that game machines enter or exit particular modes to hard meters or other auditable media on the game machines or in secure records on the host; recording logs of token transfers or machine state changes to a soft auditable record together with cryptographically secure timestamps obtained from an outside source; or random sampling of the states of various machines to produce statistical evidence that the required thresholds were note exceeded. It will be appreciated that the features provided may be altered or varied based on the particular regulatory requirements of a jurisdiction where the systems and methods are employed.

In alternative embodiments, a set of terminals may operate using a distributed control system without the need for a central or shared host. In this case the terminals may distribute the license token pool and queue requests for tokens among themselves in a peer-to-peer fashion. When a terminal exits the enabled state, the terminal may announce the availability of a license token to other terminals, and another terminal may claim the license token directly from the peer terminal.

It will be appreciated that all of the disclosed methods, games, and procedures described herein can be implemented using one or more computer programs or components. These components may be provided as a series of computer instructions on any conventional computer-readable medium, including RAM, ROM, flash memory, magnetic or optical disks, optical memory, or other storage media. The instructions may be configured to be executed by a processor which, when executing the series of computer instructions, performs or facilitates the performance of all or part of the disclosed methods, games, and procedures.

It should be understood that there exist implementations of other variations and modifications of the invention and its various aspects, as may be readily apparent to those of ordinary skill in the art, and that the invention is not limited by specific embodiments described herein. Features and embodiments described above may be combined. It is therefore contemplated to cover any and all modifications, variations, combinations or equivalents that fall within the scope of the basic underlying principles disclosed and claimed herein.

## Claims

1. A system, comprising:
a plurality of wagering game terminals each having a token-enabled state and a non-enabled state;
a plurality of tokens associated with a capability, the quantity of tokens less than the quantity of terminals, each of the plurality of tokens configured, when held by one of the terminals, to allow the terminal to operate in the token-enabled state;
a server configured to provide an instruction to at least one of the plurality of wagering game terminals in the token-enabled state, the instruction indicating a selection of one or more game formats to be provided by the wagering game terminal;
wherein the plurality of terminals are each configured to enter the token-enabled state only when a token is received by the terminal and to return to the non-enabled state when the token is surrendered by the terminal; and
wherein each terminal in the token-enabled state is configured to provide to a player the selection of one or more wagering game formats indicated by the instruction from the server, and wherein each terminal in the non-enabled state is prevented from offering wagering games;
wherein the instruction includes a return condition that instructs the at least one of the plurality of wagering game terminals to return the token to the server after a time-out period;
wherein the server is further configured to create a new token after the time-out period; and
wherein the requesting wagering game terminal is configured to discard the token after the time-out period if the at least one of the plurality of wagering game terminals becomes disconnected from the server.

2. The system of claim 1, wherein the terminal in the token-enabled state is configured to provide a selection of one or more of game formats from a plurality of different wagering game formats, the selection based, at least in part, on instructions associated with the token.

3. The system of claim 1 or claim 2, wherein the terminals are each configured to log data including at least one of: revenue generated by a terminal in the token-enabled state, the amount of time the terminal has spent in the token-enabled state, and a count of the number of token requests not immediately fulfilled, or time periods spent in the token-enable stated.

4. The system of any of claims 1 to 3, wherein the plurality of terminals are in network communication with each other, and wherein the terminals are configured to communicate to each other information indicating that a token is available.

5. The system of any of claims 1 to 4, wherein the terminals are configured to queue token requests when token requests exceed token availability.

6. The system of claim 4, wherein the order of terminals in the queue is prioritized based, at least in part, on at least one of: the amount of time the terminal has been in the queue, the location of the terminal, the amount of time the terminal has already been in the token-enabled state during a time period, the operator of the terminal, or the profitability of the terminal.

7. The system of of any of claims 1 to 6, wherein the wagering game terminal is configured to provide at least one of: a video slot machine game, a video poker game, a keno game, a lottery game, a mechanical slot machine game, a video blackjack game, a video craps game, a video bingo game, or a video roulette game.

8. A method of providing wagering games at a wagering game terminal, comprising:
whenever the game terminal is in a non-enabled state, preventing the game terminal from providing wagering games;
while the game terminal is in the non-enabled state, requesting a token associated with a capability to provide a wagering game;
responsive to the request, receiving the token;
entering a token-enabled state, responsive to the receipt of a token;
receiving instructions from a server, the instructions being associated with the token, wherein the instruction includes a return condition that instructs the wagering game terminal to return the token to the server after a time-out period;
selecting one or more game formats to provide from a plurality of wagering game formats based, at least in part, on the instructions;
providing at least one wagering game to a player at the game terminal while in the token-enabled state;
returning to the non-enabled state and surrendering the token; and
discarding the token after the time-out period if the wagering game terminal becomes disconnected from the server.

9. The method of claim 8, further comprising:
receiving a player request to play a wagering game; and
responsive to receiving the player request, entering the token-enabled state.

10. The method of claim 8 or claim 9, wherein the terminal is further configured to provide a plurality of wagering game formats, the method further comprising:
receiving instructions associated with the token; and
selecting one or more game formats to provide from the plurality of wagering game formats based, at least in part, on the instructions.

11. The method of any of claims 8 to 10, or the system of any one of claims 1 to 7, wherein the instructions associated with the token are based, at least in part, on the time of day.

12. The method of any of claims 8 to 11, or the system of any one of claims 1 to 7, wherein the return to the non-enabled state is as a result of user input, such as a user exiting the token-enabled state.

13. The method of any of claims 8 to 12, or the system of any one of claims 1 to 7, wherein the return to the non-enabled state is caused by the terminal being in the token-enabled state for at least a predetermined period of time.

14. The method of any of claims 8 to 12, wherein the return to the non-enabled state and release of the token is made responsive to the amount lost by the player exceeding a predetermined limit.

15. The method of any of claims 8 to 14, further comprising:
logging data for the terminal including at least one of: revenue generated while in the token-enabled state, time spent waiting for a token, or amount of time spent in the token-enabled state, or time periods spent in the token-enable state.

16. The method of any of claims 8 to 15, further comprising:
responsive to the surrendering of the token, communicating the availability of the token to other terminals.

17. A computer-readable storage medium encoded with instructions configured to be executed by a processor, the instructions which, when executed by the processor, cause the performance of the method of any of claims 8 to 16.

18. The system of any of claims 1 to 7, wherein the plurality of terminals are in network communication with a host over the Internet or an intranet network, and wherein the terminals are configured to communicate with the host.

19. The system of any of claims 1 to 7 and 18, wherein the plurality of terminals comprises one or more user devices selected from the group of computers, cell phones or PDAs.

20. The system of any of claims 1 to 7 or 18 to 19, wherein the terminal is configured to return the token in the event of a token return condition or a recall condition.

21. The system of any of claims 1 to 7 or 18 to 20, wherein the terminal is configured to receive a token time-out instruction and to discard the token after a time-out period identified in the time-out instruction.

22. The method of any of claims 8 to 16, wherein the plurality of terminals are in network communication with a host over the Internet or an intranet network, and the request for a token is sent of the Internet or the intranet network.

23. The method of any of claims 8 to 16 or 22, wherein the plurality of terminals comprises one or more user devices selected from the group of computers, cell phones or PDAs.

24. The method of any of claims 8 to 16 or 22 to 23, further comprising the step of returning the token in the event of a token return condition or a recall condition.

25. The method of any of claims 8 to 16 or 22 to 24, further comprising:
receiving a token time-out instruction and discarding the token after a time-out period identified in the time-out instruction.

## Patentansprüche

1. System, das aufweist:
mehrere Wettspiel-Endgeräte, die jeweils einen Token-aktivierten Zustand und einen deaktivierten Zustand haben;
mehrere Token, die mit einer Fähigkeit verbunden sind, wobei die Menge der Token geringer als die Menge der Endgeräte ist, wobei jedes der mehreren Token konfiguriert ist, um, wenn es von einem der Endgeräte gehalten wird, dem Endgerät zu erlauben, in dem Token-aktivierten Zustand zu arbeiten;
einen Server, der konfiguriert ist, um eine Anweisung an wenigstens eines der mehreren Wettspiel-Endgeräte in dem Token-aktivierten Zustand bereitzustellen, wobei die Anweisung eine Auswahl eines oder mehrerer Spielformate, die von dem Wettspiel-Endgerät bereitgestellt werden sollen, angibt;
wobei die mehreren Endgeräte jeweils konfiguriert sind, um nur dann in den Token-aktivierten Zustand einzutreten, wenn von dem Endgerät ein Token empfangen wird, und in den deaktivierten Zustand zurückzukehren, wenn das Token von dem Endgerät aufgegeben wird; und
wobei jedes Endgerät in dem Token-aktivierten Zustand konfiguriert ist, um einem Spieler die Auswahl von einem oder mehreren Wettspielformaten bereitzustellen, die durch die Anweisung von dem Server angegeben wird, und wobei jedes Endgerät in dem deaktivierten Zustand davon abgehalten wird, Wettspiele anzubieten;
wobei die Anweisung eine Rückgabebedingung umfasst, die das wenigstens eine der Wettspiel-Endgeräte anweist, das Token nach einer Ablaufzeitspanne an den Server zurückzugeben;
wobei der Server ferner konfiguriert ist, um nach der Ablaufzeitspanne ein neues Token zu erzeugen; und
wobei das anfragende Wettspiel-Endgerät konfiguriert ist, um das Token nach der Ablaufzeitspanne zu verwerfen, wenn das wenigstens eine der mehreren Wettspiel-Endgeräte von dem Server getrennt wird.

2. System nach Anspruch 1, wobei das Endgerät in dem Token-aktivierten Zustand konfiguriert ist, um eine Auswahl von einem oder mehreren Spielformaten aus mehreren verschiedenen Wettspielformaten bereitzustellen, wobei die Auswahl wenigstens teilweise auf Anweisungen basiert, die mit dem Token verbunden sind.

3. System nach Anspruch 1 oder Anspruch 2, wobei die Endgeräte jeweils konfiguriert sind, um Daten zu protokollieren, die wenigstens Eines der Folgenden aufweisen: Einnahmen, die von einem Endgerät in dem Token-aktivierten Zustand generiert werden, die Zeitmenge, die das Endgerät in dem Token-aktivierten Zustand verbracht hat, und eine Zählung der Anzahl von Token-Anfragen, die nicht sofort erfüllt wurden, oder Zeitspannen, die in dem Token-aktivierten Zustand verbracht wurden.

4. System nach einem der Ansprüche 1 bis 3, wobei die mehreren Endgeräte in einer Netzwerkkommunikation miteinander stehen, und wobei die Endgeräte konfiguriert sind, um miteinander Informationen zu kommunizieren, die angeben, dass ein Token verfügbar ist.

5. System nach einem der Ansprüche 1 bis 4, wobei die Endgeräte konfiguriert sind, um Tokenanfragen in Warteschlangen zu bringen, wenn Tokenanfragen die Tokenverfügbarkeit überschreiten.

6. System nach Anspruch 4, wobei die Reihenfolge der Endgeräte in der Warteschlange wenigstens teilweise basierend auf wenigstens Einem der Folgenden priorisiert wird: der Menge an Zeit, die es sich in der Warteschlange befindet, dem Ort des Endgeräts, der Menge an Zeit, die das Endgerät während einer Zeitspanne bereits in dem Token-aktivierten Zustand war, dem Bediener des Endgeräts oder der Pro Stabilität des Endgeräts.

7. System nach einem der Ansprüche 1 bis 6, wobei das Wettspiel-Endgerät konfiguriert ist, um wenigstens Eines der Folgenden bereitzustellen: ein Videospielautomatenspiel, ein Videopokerspiel, ein Kenospiel, ein Lotteriespiel, ein mechanisches Spielautomatenspiel, ein Video-Blackjackspiel, ein Videowürfelspiel, ein Video-Bingospiel oder ein Video-Roulettespiel.

8. Verfahren zur Bereitstellung von Wettspielen an einem Wettspiel-Endgerät, das aufweist:
während das Wettspiel-Endgerät in dem deaktivierten Zustand ist, Anfragen eines Tokens, das mit einer Fähigkeit verbunden ist, um ein Wettspiel bereitzustellen;
ansprechend auf die Anfrage Empfangen des Token;
ansprechend auf den Empfang eines Token Eintreten in einen Token-aktivierten Zustand;
Empfangen von Anweisungen von einem Server, wobei die Anweisungen mit dem Token verbunden sind, wobei die Anweisung eine Rückgabebedingung umfasst, die das Wettspiel-Endgerät anweist, das Token nach einer Ablaufzeitspanne an den Server zurückzugeben;
wenigstens teilweise basierend auf den Anweisungen Auswählen eines oder mehrerer Spielformate, die bereitgestellt werden sollen, aus mehreren Wettspielformaten;
Bereitstellen wenigstens eines Wettspiels an einen Spieler an dem Wettspiel-Endgerät, während es in dem Token-aktivierten Zustand ist;
Zurückkehren in den deaktivierten Zustand und Aufgeben des Token; und
Verwerfen des Token nach der Ablaufzeitspanne, wenn das Wettspiel-Endgerät von dem Server getrennt wird.

9. Verfahren nach Anspruch 8, das ferner aufweist:
Empfangen einer Spieleranfrage, um ein Wettspiel zu spielen; und
ansprechend auf den Empfang der Spieleranfrage Eintreten in den Token-aktivierten Zustand.

10. Verfahren nach Anspruch 8 oder Anspruch 9, wobei das Endgerät ferner konfiguriert ist, um mehrere Wettspielformate bereitzustellen, wobei das Verfahren ferner aufweist:
Empfangen von Anweisungen in Verbindung mit dem Token; und
Auswählen eines oder mehrerer Spielformate, die bereitgestellt werden sollen, aus den mehreren Wettspielformaten wenigstens teilweise basierend auf den Anweisungen.

11. Verfahren nach einem der Ansprüche 8 bis 10 oder System nach einem der Ansprüche 1 bis 7, wobei die Anweisungen in Verbindung mit dem Token teilweise auf der Tageszeit basieren.

12. Verfahren nach einem der Ansprüche 8 bis 11 oder System nach einem der Ansprüche 1 bis 7, wobei die Rückkehr in den deaktivierten Zustand als Ergebnis einer Benutzereingabe, wie etwa, dass ein Benutzer den Token-aktivierten Zustand verlässt, erfolgt.

13. Verfahren nach einem der Ansprüche 8 bis 12 oder System nach einem der Ansprüche 1 bis 7, wobei die Rückkehr in den deaktivierten Zustand bewirkt wird, indem das Endgerät wenigstens eine vorgegebene Zeitspanne lang in dem Token-aktivierten Zustand ist.

14. Verfahren nach einem der Ansprüche 8 bis 12, wobei die Rückkehr in den deaktivierten Zustand und die Freigabe des Token ansprechend darauf erfolgt, dass die von dem Spieler verlorene Summe eine vorgegebene Grenze überschreitet.

15. Verfahren nach einem der Ansprüche 8 bis 14, das ferner aufweist:
Protokollieren von Daten für das Endgerät, die wenigstens Eines der Folgenden aufweisen: Einnahmen, die in dem Token-aktivierten Zustand generiert werden, die Zeitmenge, die mit dem Warten auf ein Token verbracht wurde, oder die Zeitmenge, die in dem Token-aktivierten Zustand verbracht wurde, oder Zeitspannen die in dem Token-aktivierten Zustand verbracht wurden.

16. Verfahren nach einem der Ansprüche 8 bis 15, das ferner aufweist:
ansprechend auf die Aufgabe des Token Kommunizieren der Verfügbarkeit des Token an andere Endgeräte.

17. Computerlesbares Speichermedium, das mit Anweisungen codiert ist, die konfiguriert sind, um von einem Prozessor ausgeführt zu werden, wobei die Anweisungen, wenn sie von dem Prozessor ausgeführt werden, die Durchführung des Verfahrens nach einem der Ansprüche 8 bis 16 bewirken.

18. System nach einem der Ansprüche 1 bis 7, wobei die mehreren Endgeräte über das Internet oder ein Intranetnetzwerk in einer Netzwerkkommunikation mit einem Host stehen, und wobei die Endgeräte konfiguriert sind, um mit dem Host zu kommunizieren.

19. System nach einem der Ansprüche 1 bis 7 und 18, wobei die mehreren Endgeräte ein oder mehrere Benutzervorrichtungen aufweisen, die aus der Gruppe der Computer, Zellulartelefone oder PDAs ausgewählt sind.

20. System nach einem der Ansprüche 1 bis 7 oder 18 bis 19, wobei das Endgerät konfiguriert ist, um das Token in dem Fall einer Token-Rückgabebedingung oder einer Rückrufbedingung zurückzugeben.

21. System nach einem der Ansprüche 1 bis 7 oder 18 bis 20, wobei das Endgerät konfiguriert ist, um eine Token-Ablaufanweisung zu empfangen und das Token nach einer Zeitablaufzeitspanne, die in der Ablaufanweisung bestimmt wird, zu verwerfen.

22. Verfahren nach einem der Ansprüche 8 bis 16, wobei die mehreren Endgeräte über das Internet oder ein Intranetnetzwerk mit einem Host kommunizieren und die Anfrage eines Token über das Internet oder das Intranetnetzwerk gesendet wird.

23. Verfahren nach einem der Ansprüche 8 bis 16 oder 22, wobei die mehreren Endgeräte ein oder mehrere Benutzervorrichtungen aufweisen, die aus der Gruppe der Computer, Zellulartelefone oder PDAs ausgewählt werden.

24. Verfahren nach einem der Ansprüche 8 bis 16 oder 22 bis 23, das ferner den Schritt des Zurückgebens des Token in dem Fall einer Token-Rückgabebedingung oder einer Rückrufbedingung aufweist.

25. Verfahren nach einem der Ansprüche 8 bis 16 oder 22 bis 24, das ferner aufweist:
Empfangen einer Token-Ablaufanweisung und Verwerfen des Token nach einer Zeitablaufzeitspanne, die in der Ablaufanweisung bestimmt wird.

## Revendications

1. Système, comprenant de :
une pluralité de terminaux de jeu de paris ayant chacun un état activé par un jeton et un état non activé ;
une pluralité de jetons associés à une capacité, la quantité de jetons étant inférieure à la quantité de terminaux, chacun jeton de la pluralité étant configuré, lorsqu'il est détenu par l'un des terminaux, pour permettre au terminal de fonctionner dans l'état activé par un jeton ;
un serveur configuré pour fournir une instruction à au moins l'un de la pluralité de terminaux de jeu de paris dans l'état activé par un jeton, l'instruction indiquant une sélection d'un ou plusieurs formats de jeu à fournir par le terminal de jeu de paris ;
dans lequel chaque terminal de la pluralité de terminaux est configuré pour passer à l'état activé par un jeton uniquement lorsqu'un jeton est reçu par le terminal, et pour revenir à l'état non activé lorsque le jeton est rendu par le terminal ; et
dans lequel chaque terminal dans l'état activé par un jeton est configuré pour offrir à un joueur le choix d'un ou plusieurs formats de jeu de paris indiqués par l'instruction qui provient du serveur, et dans lequel chaque terminal dans l'état non activé ne peut proposer des jeux de paris ;
dans lequel l'instruction comprend une condition de retour qui demande à au moins l'un de la pluralité de terminaux de jeu de paris de renvoyer le jeton au serveur au bout d'une période d'expiration ;
dans lequel le serveur est en outre configuré pour créer un nouveau jeton après la période d'expiration ; et
dans lequel le terminal de jeu de paris demandeur est configuré pour jeter le jeton après la période d'expiration si l'au moins un de la pluralité de terminaux de jeu de paris est déconnecté du serveur.

2. Système selon la revendication 1, dans lequel le terminal dans l'état activé par un jeton est configuré pour proposer une sélection d'un ou plusieurs formats de jeu parmi une pluralité de formats de jeux de paris différents, la sélection reposant, au moins en partie, sur des instructions associées au jeton.

3. Système selon la revendication 1 ou 2, dans lequel les terminaux sont chacun configurés pour enregistrer des données comprenant au moins l'un des éléments choisis parmi : des recettes générées par un terminal dans l'état activé par un jeton, du temps que le terminal a passé dans l'état activé par un jeton, et du nombre de demandes de jetons qui n'ont pas été immédiatement satisfaites, ou des périodes de temps passées dans l'état activé par un jeton.

4. Système selon l'une des revendications 1 à 3, dans lequel les terminaux sont en communication réseau les uns avec les autres, et dans lequel les terminaux sont configurés pour communiquer entre eux d'autres informations indiquant qu'un jeton est disponible.

5. Système selon l'une des revendications 1 à 4, dans lequel les terminaux sont configurés pour mettre en file d'attente les demandes de jetons lorsque les demandes de jetons dépassent la disponibilité des jetons.

6. Système selon la revendication 4, dans lequel l'ordre des terminaux dans la file d'attente est hiérarchisé sur la base, au moins en partie, d'au moins l'un : du temps que le terminal a passé dans la file d'attente, de l'emplacement du terminal, du temps que le terminal a déjà passé dans l'état activé par un jeton pendant une certaine période de temps, de l'opérateur du terminal, ou de la rentabilité du terminal.

7. Système selon l'une quelconque des revendications 1 à 6, dans lequel le terminal de jeu de paris est configuré pour offrir au moins l'un : d'un jeu vidéo de machine à sous, d'un jeu vidéo de poker, d'un jeu de keno, d'un jeu de loterie, d'un jeu de machine à sous mécanique, d'un jeu vidéo de blackjack, d'un jeu vidéo de craps, d'un jeu vidéo de bingo, ou d'un jeu vidéo de roulette.

8. Procédé qui consiste à prévoir des jeux de paris au niveau d'un terminal de jeux de paris, comprenant :
lorsque le terminal de jeu se trouve dans un état non activé, le fait d'empêcher le terminal de jeu de proposer des jeux de paris ;
pendant que le terminal de jeu se trouve dans l'état non activé, la demande d'un jeton associé à une capacité de proposer un jeu de paris ;
en réponse à la demande, la réception du jeton ;
le passage à un état activé par un jeton, en réponse à la réception d'un jeton ;
la réception d'instructions de la part d'un serveur, les instructions étant associées au jeton, les instructions comprenant une condition de retour qui demande au terminal de jeu de paris de renvoyer le jeton au serveur après une période d'expiration ;
la sélection d'un ou plusieurs formats de jeu à proposer parmi une pluralité de formats de jeux de paris sur la base, au moins en partie, des instructions ;
le fait de proposer au moins un jeu de paris à un joueur au niveau du terminal de jeu pendant qu'il se trouve dans l'état activé par un jeton ;
le retour à l'état non activé et la restitution du jeton ; et
l'élimination du jeton après la période d'expiration si le terminal de jeu de paris se déconnecte du serveur.

9. Procédé selon la revendication 8, comprenant en outre :
la réception d'une demande, de la part d'un joueur, de jouer à un jeu de paris ; et
en réponse à la réception de la demande du joueur, le passage à l'état activé par un jeton.

10. Procédé selon la revendication 8 ou 9, dans lequel le terminal est en outre configuré pour :
proposer une pluralité de formats de jeux de paris, le procédé comprenant en outre :
la réception d'instructions associées au jeton ; et
la sélection d'un ou plusieurs formats de jeu à proposer parmi la pluralité de formats de jeux de paris sur la base, au moins en partie, des instructions.

11. Procédé selon l'une des revendications 8 à 10, ou système selon l'une quelconque des revendications 1 à 7, dans lequel les instructions associées au jeton reposent, au moins en partie, sur l'heure de la journée.

12. Procédé selon l'une quelconque des revendications 8 à 11, ou système selon l'une quelconque des revendications 1 à 7, dans lequel le retour à l'état non activé s'effectue à la suite d'une entrée utilisateur, comme un utilisateur qui quitte l'état activé par un jeton.

13. Procédé selon l'une des revendications 8 à 12, ou système selon l'une quelconque des revendications 1 à 7, dans lequel le retour à l'état non activé est provoqué par le terminal qui se trouve dans l'état activé par un jeton pendant au moins une durée prédéterminée.

14. Procédé selon l'une des revendications 8 à 12, dans lequel le retour à l'état non activé et la libération du jeton s'effectuent en réponse à la somme perdue par le joueur et dépassant une limite prédéterminée.

15. Procédé selon l'une des revendications 8 à 14, comprenant en outre :
l'enregistrement de données pour le terminal, comprenant au moins l'un : des recettes générées pendant que le terminal se trouve dans l'état activé par un jeton, du temps passé à attendre un jeton, ou du temps passé dans l'état activé par un jeton, ou des périodes de temps passées dans l'état activé par un jeton.

16. Procédé selon l'une des revendications 8 à 15, comprenant en outre :
en réponse à la restitution du jeton, la communication de la disponibilité du jeton à d'autres terminaux.

17. Support de stockage lisible par un ordinateur encodé avec des instructions configurées pour être exécutées par un processeur, les instructions, lorsqu'elles sont exécutées par le processeur, provoquant l'exécution du procédé selon l'une des revendications 8 à 16.

18. Système selon l'une des revendications 1 à 7, dans lequel la pluralité de terminaux est en communication réseau avec un hôte sur Internet ou un réseau intranet, et dans lequel les terminaux sont configurés pour communiquer avec l'hôte.

19. Système selon l'une des revendications 1 à 7 et 18, dans lequel la pluralité de terminaux comprend un ou plusieurs dispositifs utilisateur choisi parmi le groupe d'ordinateurs, de téléphones cellulaires ou d'assistants numériques personnels.

20. Système selon l'une des revendications 1 à 7 ou 18 à 19, dans lequel le terminal est configuré pour renvoyer le jeton en cas de condition de retour de jeton ou de condition de rappel.

21. Système selon l'une des revendications 1 à 7 ou 18 à 20, dans lequel le terminal est configuré pour recevoir une instruction d'expiration de jeton et pour éliminer le jeton après une période d'expiration identifiée dans l'instruction d'expiration.

22. Procédé selon l'une des revendications 8 à 16, dans lequel la pluralité de terminaux est en communication réseau avec un hôte sur Internet ou sur un réseau intranet, et la demande de jeton est envoyée sur Internet ou le réseau intranet.

23. Procédé selon l'une des revendications 8 à 16 ou 22, dans lequel la pluralité de terminaux comprend un ou plusieurs dispositifs utilisateur choisi parmi le groupe d'ordinateurs, de téléphones cellulaires ou d'assistants numériques personnels.

24. Procédé selon l'une des revendications 8 à 16 ou 22 à 23, comprenant en outre l'étape de renvoi du jeton en cas de condition de retour de jeton ou de condition de rappel.

25. Procédé selon l'une des revendications 8 à 16 ou 22 à 24, comprenant en outre :
la réception d'une instruction d'expiration de jeton et l'élimination du jeton après une période d'expiration identifiée dans l'instruction d'expiration.
